# EUROPÄISCHE PATENTANMELDUNG

(11) **EP 4 520 498 A2**
(43) Veröffentlichungstag der Anmeldung: **12.03.2025**
(21) Anmeldenummer: 25154557.0
(22) Anmeldetag: 07.04.2020
(51) Int. Cl.: B28B 11/24

(54) **SCHALUNG ZUR HERSTELLUNG EINES BETONTÜBBINGS EINES TUNNELAUSBAUSYSTEMS**

(30) Priorität: 07.04.2019 DE 102019109084
(62) Teilanmeldung aus: 20721159.0
(71) Anmelder: HERRENKNECHT AKTIENGESELLSCHAFT, 77963 Schwanau (DE)
(72) Erfinder: Medel, Stefan, 77723 Gengenbach (DE)
(74) Vertreter: Klickow & Wetzel PartGmbB

(57) **Zusammenfassung**

Die Erfindung betrifft eine Schalung zur Herstellung eines Betontübbings (500) eines Tunnelausbausystems, mit einer Betonwanne zur Aufnahme einer zur Herstellung des Tübbings notwendigen Betonmenge und falls erforderlich zur Aufnahme der vorgesehenen Bewehrung des Betontübbings (500), wobei die Betonwanne wenigstens einen Boden und an dem Boden der Form nach angepassten Wände (14, 15) aufweist, wobei wenigstens ein Wand von dem Boden lösbar und gegenüber dem Boden zwischen einer geschlossenen Position und einer geöffneten Position verschwenkbar angeordnet ist. Erfindungsgemäß ist dabei vorgesehen, dass die Schalung wenigstens ein Antriebssystem zum Verschwenken der wenigstens einen Wand zwischen der offenen und der geschlossenen Position und zum Halten in der jeweiligen Position aufweist, und dass das Antriebssystem wenigstens einen Aktuator für das Verschwenken der wenigstens einen Wand zwischen der offenen und der geschlossenen Position aufweist.

## Beschreibung

Die Erfindung betrifft eine Schalung zur Herstellung eines Betontübbings eines Tunnelausbausystems mit einer Betonwanne zur Aufnahme einer zur Herstellung des Tübbings notwendigen Betonmenge und falls erforderlich zur Aufnahme der vorgesehenen Bewehrung des Betontübbings, wobei die Betonwanne wenigstens einen Boden und an dem Boden der Form nach angepassten Wände aufweist, wobei wenigstens ein Wand von dem Boden lösbar und gegenüber dem Boden zwischen einer geschlossenen Position und einer geöffneten Position verschwenkbar angeordnet ist,

Solche Schalungen kommen bevorzugt in eine Produktionsanlage zur Herstellung des Betontübbings des Tunnelausbausystems zur Herstellung des Betontübbings zum Einsatz.

Zur Betontübbingproduktion werden die einzelnen Arbeitsschritte zur Herstellung eines Betontübbings manuell durchgeführt. Neben den dabei anfallenden Arbeitskosten ist die auszuführende Arbeit monoton und für die Mitarbeiter anstrengend. Weiterhin werden die Tätigkeiten mit schweren Gegenständen durchgeführt, sodass Verletzungsgefahr gegeben ist. Trotz der wiederkehrenden Tätigkeiten ist es gleichzeitig notwendig, die Arbeiten mit sehr hoher Präzision durchzuführen.

Dieses betrifft insbesondere den Einsatz der Schalungen. Diese müssen an verschiedenen Arbeitsstationen der Produktionsline teilweise oder vollständig geöffnet oder geschlossen werden. Dieses erfolgt dabei manuell und ist daher arbeits- und zeitintensiv. Weiterhin muss erhebliche Sorgfalt insbesondere beim Schließen aufgewendet werden, damit die Schalungen dicht sind und der eingebrachte Beton beim Betonieren nicht ausläuft.

Aufgabe der Erfindung ist daher, zumindest Teilaspekte der zuvor genannten Probleme zu reduzieren.

Gelöst wird die Aufgabe dadurch, dass die Schalung wenigstens ein Antriebssystem zum Verschwenken der wenigstens einen Wand zwischen der offenen und der geschlossenen Position und zum Halten in der jeweiligen Position aufweist, und dass das Antriebssystem wenigstens einen Aktuator für das Verschwenken der wenigstens einen Wand zwischen der offenen und der geschlossenen Position aufweist.

Hierdurch wird es auf einfache Weise möglich, das Öffnen und Schließen zu vereinfachen und gleichzeitig auf einfache Weise das Halten sicherzustellen, so dass die Schalung sicher geschlossen bleibt.

Eine weitere Lehre der Erfindung sieht vor, dass sich wenigstens zwei Wände an einem ihrer beiden äußeren Endbereiche mit ihren kurzen Seiten in geschlossener Position berühren und dabei eine Ecke der Betonwanne ausformen. Dabei ist vorteilhaft, dass an einer der zwei Wände im äußeren Endbereich ein männliches Eingriffelement und an der anderen Wand im äußeren Endbereich ein weibliches Eingriffelement vorgesehen ist, die in geschlossener Position der zwei Wände ineinandergreifen. Hierdurch kann auf einfache Weise der Schluss der Ecke sichergestellt werden.

Dabei ist weiterhin vorteilhaft, dass die zwei Wände in ihren äußeren Endbereichen miteinander mittels wenigstens einer Schraubverbindung oder einer Klemmverbindung miteinander verbunden werden, wobei die Schraubverbindung oder Klemmverbindung bevorzugt zur Positionssicherung dient, und/oder wobei die Schraubverbindung eine Schraube mit einem entlang wenigstens eines Teils der Schraube angeordneten Federelement aufweist. Dieses stellt insbesondere eine einfache Zusatzsicherung dar, bei der auf einfache Weise die Positionierung gewährleistet bleibt.

Eine weitere Lehre der Erfindung sieht vor, dass die Klemmverbindung ein Arretierungselement aufweist, das an einem der Wandelemente angeordnet ist und verschwenkbar zwischen einer offenen und einer geschlossenen Position mit wenigstens einem Aktuator, beispielsweise einem Hydraulikzylinder oder einem Spindelsystem, bewegbar ist. Dabei ist vorteilhaft, dass der Aktuator mit dem nachfolgend beschriebenen Antriebssystem verbunden ist. Hierdurch kann auf einfache Weise eine Sicherung bereitgestellt werden.

Eine weitere Lehre der Erfindung sieht vor, dass die wenigstens eine Wand zum Bewegen zwischen der offenen und der geschlossenen Position mit wenigstens zwei Aktuatoren des Antriebssystems verbunden ist. Hierdurch lässt sich auf einfache Weise die notwendigen Haltekräfte aufbringen und verteilen.

Eine weitere Lehre der Erfindung sieht vor, dass das wenigstens eine Wandelement zwei äußere Endbereiche aufweist, und dass pro Endbereich zum Bewegen und Halten des Wandelements wenigstens ein Aktuator vorgesehen ist. Es hat sich gezeigt, dass hierdurch auf besonders einfache Weise ein dichter Verschluss auch bei Befüllung der Schalung mit Beton und evtl. Verformung der Seitenwände hierdurch gewährleistet werden kann.

Eine weitere Lehre der Erfindung sieht vor, dass das Antriebssystem an einer Arbeitsstation mit einem externen Antrieb zum Antreiben des Antriebssystems verbindbar ist. Hierdurch kann der Aufbau der Schalung möglichst einfach ausfallen, da auf einen Antrieb in der Schalung verzichtet werden kann.

Eine weitere Lehre der Erfindung sieht vor, dass es sich bei dem Antriebssystem um ein Hydrauliksystem mit wenigstens einem Hydraulikkreislauf handelt, wobei das Antriebssystem wenigstens einen Hydraulikzylinder als Aktuator aufweist, der mit dem Hydraulikkreislauf verbunden ist. Hierdurch kann auf einfache Weise sowohl das Bewegen als auch das Halten mit hinreichenden Kräften bereitgestellt werden.

Dabei ist vorteilhaft, dass der Hydraulikkreislauf ein Sperrelement zum Halten des Drucks im Hydraulikkreislauf aufweist, wobei es sich bevorzugt um ein Lastaufnahmeventil handelt. Dabei ist weiterhin vorteilhaft, dass der Hydraulikkreislauf ein Element zum Ausgleich einer Druckänderung und/oder einer Volumenänderung im Hydraulikkreislauf aufweist, wobei es sich bevorzugt um einen Blindzylinder oder um einen Membranspeicher handelt. Dabei ist weiterhin vorteilhaft, dass der Hydraulikkreislauf wenigstens ein Anschlusselement zum lösbaren Anschließen des Hydraulikkreislaufs an ein Hydraulikaggregat als externen Antrieb des Antriebssystems an einer Arbeitsstation aufweist. Weiterhin ist vorteilhaft vorgesehen, dass die einzelnen Hydraulikzylinder mittels Druckfolgeventile verbunden sind, Dadurch kann auf einfache Weise eine Ablaufsteuerung der einzelnen Schritte des Öffnens und/oder Schließens der Schalung erreicht werden. Durch wenigstens eines der zuvor genannten Elemente lässt sich ein erfindungsgemäßer Hydraulikkreislauf auf einfache Weise bereitstellen.

Eine weitere Lehre der Erfindung sieht vor, dass es sich bei dem Antriebssystem um einen mechanischen Antrieb als Aktuator, bevorzugt um einen Spindelantrieb, handelt. Dabei ist vorteilhaft, dass der mechanische Antrieb selbsthemmend ausgelegt ist oder mit einem Sperrelement versehen ist. Dabei ist weiterhin vorteilhaft, dass der mechanische Antrieb ein Verbindungselement zum lösbaren Verbinden mit einem externen Rotationsantrieb, beispielsweise einem Drehmomentenschrauber, als externen Antrieb des Antriebssystems an einer Arbeitsstation aufweist.

Eine weitere Lehre der Erfindung sieht vor, dass an der Schalung schwenkbar wenigstens ein Deckelelement vorgesehen ist, der auf der Oberseite der Betonwanne anordbar ist und auf dieser die Oberseite wenigstens teilweise überdeckt. Dabei ist vorteilhaft, dass das Deckelelement zwischen einer offenen und einer geschlossenen Position mit wenigstens einem Aktuator, beispielsweise einem Hydraulikzylinder oder einem Spindelsystem, verschwenkbar ist, der das Deckelement bevorzugt in der jeweiligen Position hält. Dabei ist weiterhin vorteilhaft, dass der Aktuator mit dem zuvor beschriebenen Antriebssystem verbunden ist.

Eine weitere Lehre der Erfindung sieht vor, dass das Deckelelement ein Arretierungselement aufweist, das das Deckelelement in geschlossener Position gegenüber der Schalung arretiert. Nachfolgend wird die Erfindung anhand von Ausführungsbeispielen in Verbindung mit einer Zeichnung näher erläutert. Dabei zeigen:
- Figur 1: eine Draufsicht auf eine ersten Ausführungsform einer Produktionsanlage,
- Figur 2: eine räumliche Ansicht zu Figur 1,
- Figur 3: eine Seitenansicht zu Figur 1,
- Figur 4: eine weitere räumliche Ansicht zu Figur 1,
- Figur 5: eine räumliche Ausschnittsvergrößerung zu Figur 3,
- Figur 6: eine räumliche Ausschnittsansicht zu Figur 5,
- Figur 7: eine räumliche Ansicht einer ersten Ausführungsform einer erfindungsgemäßen Schalung,
- Figur 8: eine vergrößerte Ausschnittsansicht zu Figur 7,
- Figur 9: eine räumliche Ansicht einer geöffneten ersten Ausführungsform der erfindungsgemäßen Schalung,
- Figur 10: eine Schnittansicht durch ein Befestigungselement zu Figur 7.
- Figur 11: eine räumliche Ansicht einer zweiten Ausführungsform einer erfindungsgemäßen Schalung in geschlossenem Zustand,
- Figur 11a: eine vergrößerte Ausschnittsansicht zu Figur 11,
- Figur 12: eine Unteransicht zu Figur 11,
- Figur 12a: eine vergrößerte Ausschnittsansicht zu Figur 12,
- Figur 12b: eine weitere vergrößerte Ausschnittsansicht zu Figur 12,
- Figur 13: eine räumliche Ansicht einer zweiten Ausführungsform einer erfindungsgemäßen Schalung in geöffnetem Zustand,
- Figur 13a: eine vergrößerte Ausschnittsansicht zu Figur 13,
- Figur 13b: eine weitere vergrößerte Ausschnittsansicht zu Figur 13,
- Figur 14: eine räumliche Seitenansicht auf die Seitenwand der erfindungsgemäßen Schalung zu den Figuren 11 und 13, und
- Figur 15: eine räumliche Seitenansicht auf die Stirnwand der erfindungsgemäßen Schalung.

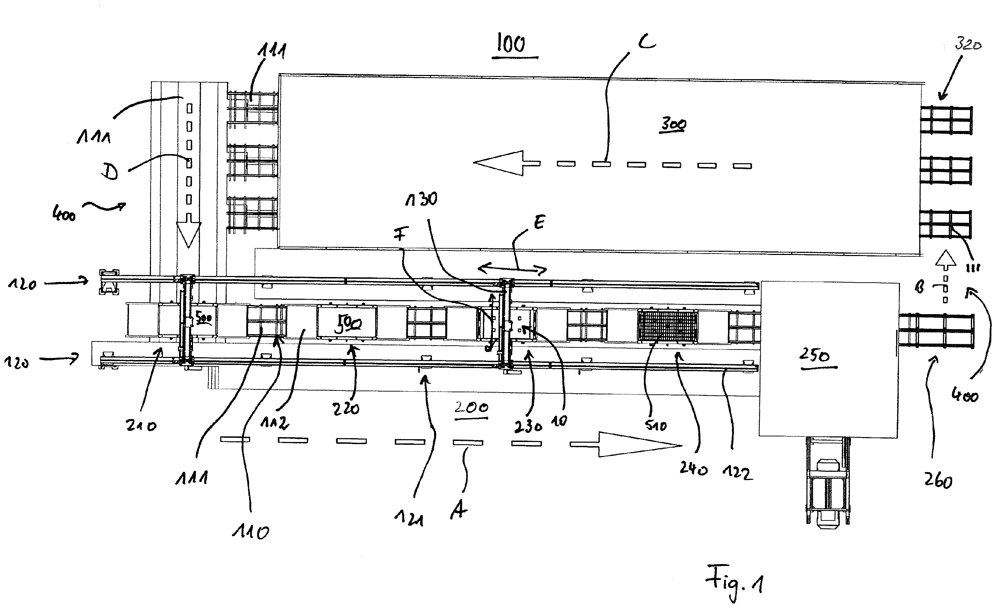

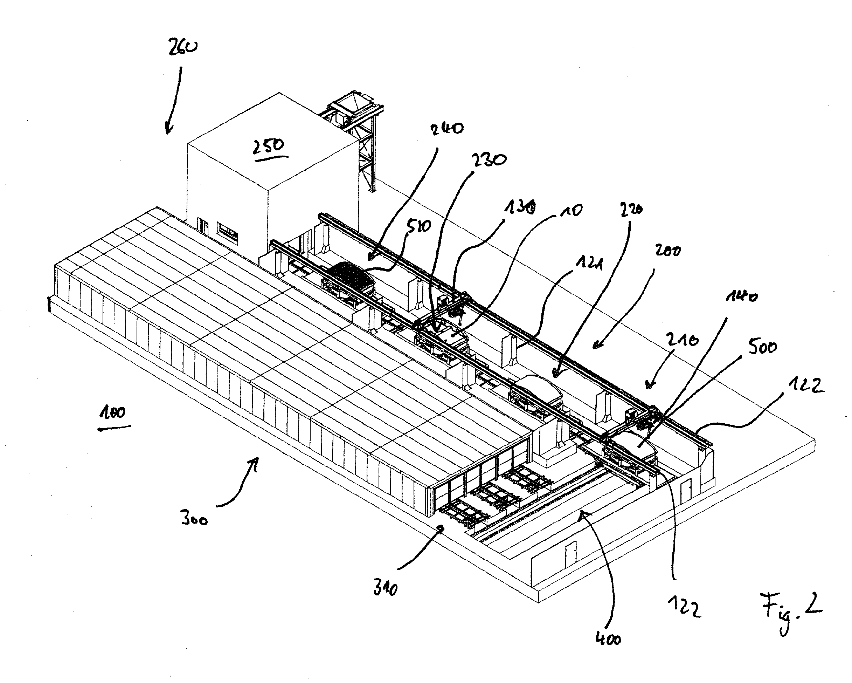

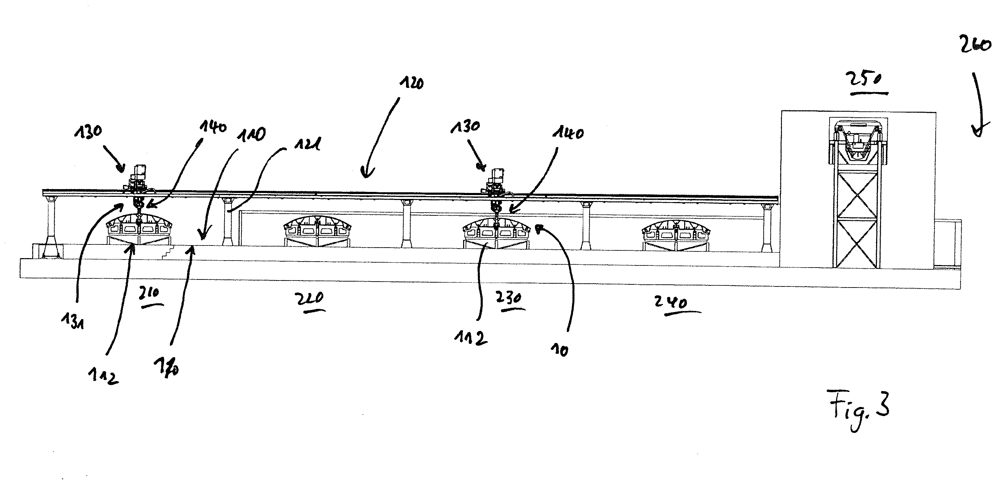

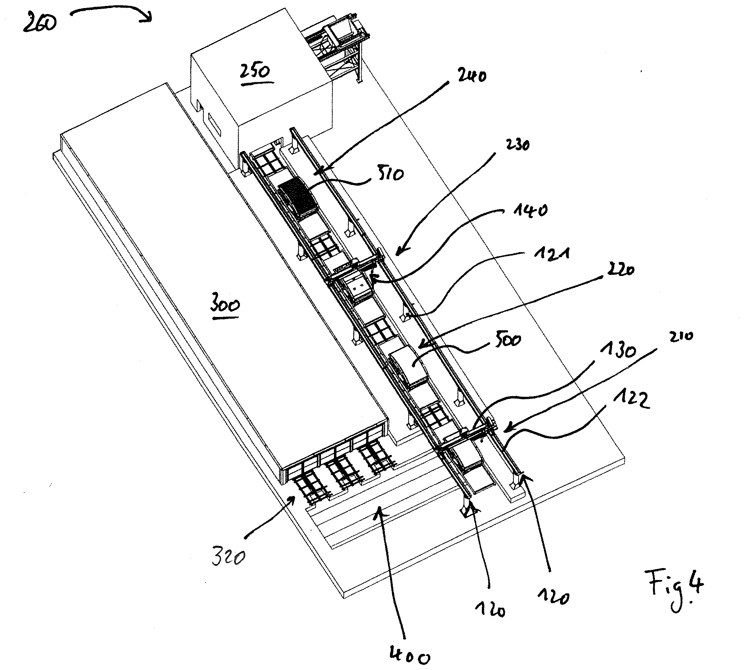

Figur 1 bis 4 zeigen eine Produktionsanlage 100 für Betontübbinge 500 bei der eine erfindungsgemäße Schalung 10 zu Anwendung kommt.

Die Produktionsanlage 100 ist dabei beispielsweise als Umlaufanlage für die Schalungen 10 ausgeführt. Alternativ kann die erfindungsgemäße Schalung auch bei einer Standanlage (nicht dargestellt) zum Einsatz kommen, bei der die Schalungen für die Herstellungsschritte vor dem Einbringen in eine Härteanlage zum beschleunigten Ersthärten des Betontübbings 500, sofern dieses Härten notwendig ist, erfolgen, an einem Ort verbleiben.

Die Umlaufanlage besteht dabei aus einer Produktionslinie 200 und einem Härtetunnel 300. Der Härtetunnel 300 weist dabei mindestens eine Härtelinie 310, in Figur 1 dargestellt drei Härtelinien 310, auf. Die Produktionslinie 200 und der Härtetunnel 300 bzw. dessen Härtelinien 310 sind mit einem Querförderer 400 verbunden.

Die Produktionsanlage 100 weist einen Transportweg 110 auf. Der Transportweg 110 weist eine Fahrbahn 111 auf, auf der ein Transportmittel 112 verfahrbar ist. Auf dem Transportmittel 112 ist eine erfindungsgemäße Schalung 10 angeordnet. Die Transportmittel 112 bewegen sich entlang des Transportwegs 110 in Pfeilrichtung A durch die Produktionslinie 200.

Nach Durchlaufen der Produktionslinie 200 werden sie vom Querförderer 400 in Pfeilrichtung B den Härtelinien 320 des Härtetunnels 300 zugeführt. Auch der Querförderer 400 weist eine Fahrbahn 111 auf, auf der die Transportmittel 112 bewegt werden. Gleiches gilt auch für die Härtelinien 320 des Härtetunnels 300.

Nach Durchlaufen des Härtetunnels 300 in Pfeilrichtung C werden die Transportmittel 112 mittels des Querförderer 400 in Pfeilrichtung D der Produktionslinie 200 wieder zugeführt. Der Umlauf ist dann abgeschlossen.

In Pfeilrichtung A, in Figur 1 von links nach rechts gesehen, weist die Produktionslinie 200 hier beispielhaft sechs Arbeitsstationen 210 - 260 auf.

An der ersten Arbeitsstation 210 wird die Schalung 10 wie nachfolgend erläutert, geöffnet.

An der zweiten Arbeitsstation 220 wird der fertige Tübbing 500 mittels eines Hebeelements (nicht dargestellt) aus der Schalung 10 entnommen.

An der dritten Arbeitsstation 230 wird die Schalung 10 gereinigt und für die Aufnahme von Einbauelemente sowie die Betonierung vorbereitet. Hierzu wird beispielsweise ein Trennmittel (Schalungsöl) auf alle Flächen und Teile der Schalung aufgebracht, die in den Kontakt mit dem Beton des herzustellenden Tübbings 500 kommen und nicht Bestandteil des Tübbings 500 werden sollen.

An der vierten Arbeitsstation 240 wird die Schalung 10 mit den Einbauteilen bestückt, die Bestandteil des fertigen Tübbings 500 sind. Hierbei handelt es sich beispielsweise um eine Bewehrung 510, Elektrodübel (nicht dargestellt), einen Schutzliner oder dergleichen.

Nach Einbringen der Einbauteile, die alternativ auch vollständig oder teilweise an der dritten Arbeitsstation 230 nach Abschluss der Reinigung und der Vorbereitung in die Schalung 10 eingebracht werden können, wird die Schalung 10 mit den eingebrachten Komponenten kontrolliert, um zu gewährleisten, dass die Schalung 10 korrekt zusammengebaut ist und die Einbauteile des Tübbings 500 korrekt angeordnet sind.

Das Bestücken der Schalung 10 mit den Einbauteilen kann auch aufgeteilt in den Arbeitsstationen 230, 240 erfolgen.

In der fünften Arbeitsstation 250 werden, soweit nicht vorher bereits geschehen, die evtl. vorgesehenen Deckel (nicht dargestellt) der Schalung montiert, der einzubringende Beton vorbereitet nach notwendiger Mixtur und in notwendiger Menge und in die Schalung 10 eingebracht. Anschließend wird der eingebrachte Beton in bekannter Weise verdichtet. Das Einbringen und Verdichten kann abwechselnd erfolgen, bis die notwendige Betonmenge eingebracht wurde.

An der sechsten Arbeitsstation 260 wird die Betonoberfläche 520 des Tübbings behandelt, beispielsweise geglättet. Vor dem Glätten werden evtl. Deckel entfernt.

Die Produktionslinie 200 wird dann nach der sechsten Arbeitsstation 260 in diesem Beispiel verlassen, in dem das Transportmittel 112 mit der Schalung 10 und dem darin vollständig hergestellten rohen Tübbing 500 an den Querförderer 400 übergeben wird.

Die Anzahl der Arbeitsstationen ist hier nur beispielhaft zu sehen. Es ist einem Fachmann ohne Weiteres möglich, die Anzahl der Arbeitsstationen durch Zusammenfassen oder Entkoppeln von einzelnen Arbeitsschritten entsprechend den Notwendigkeiten anzupassen.

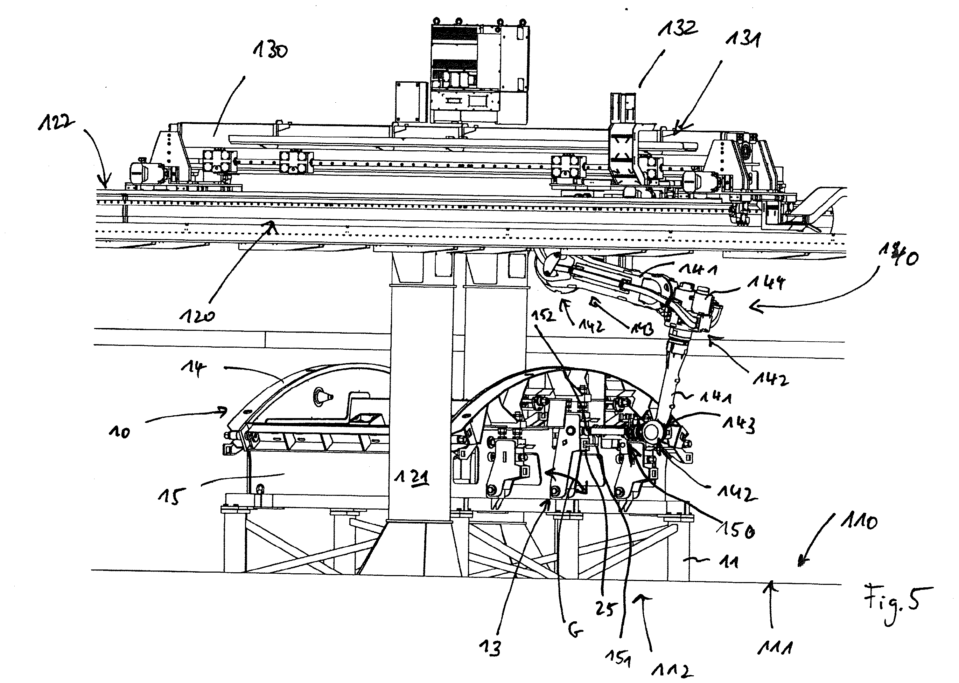

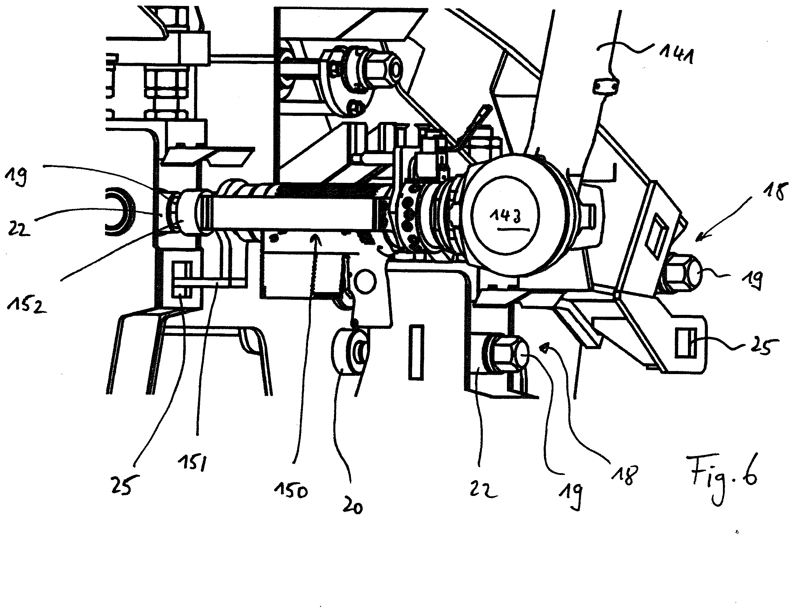

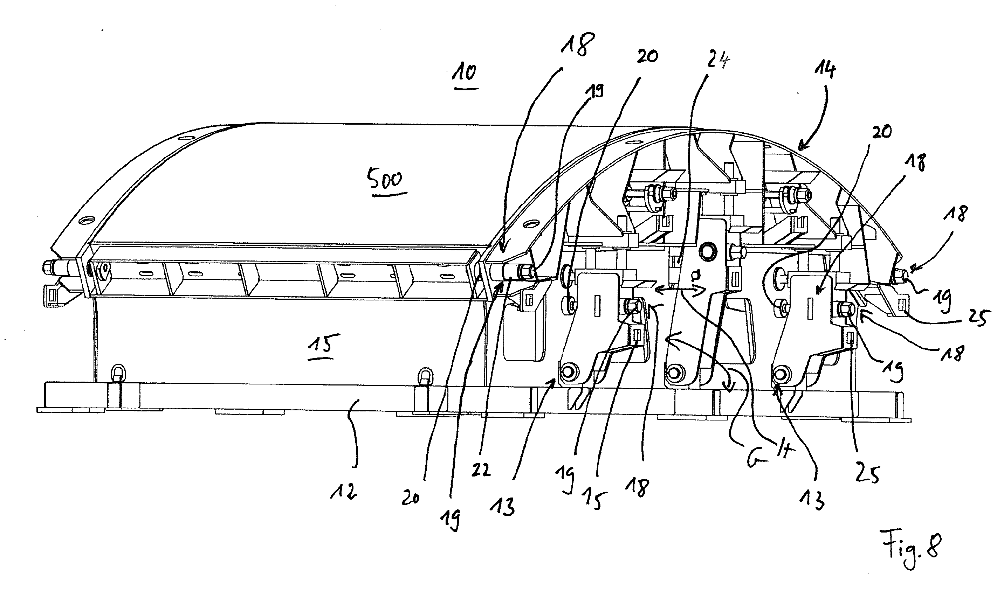

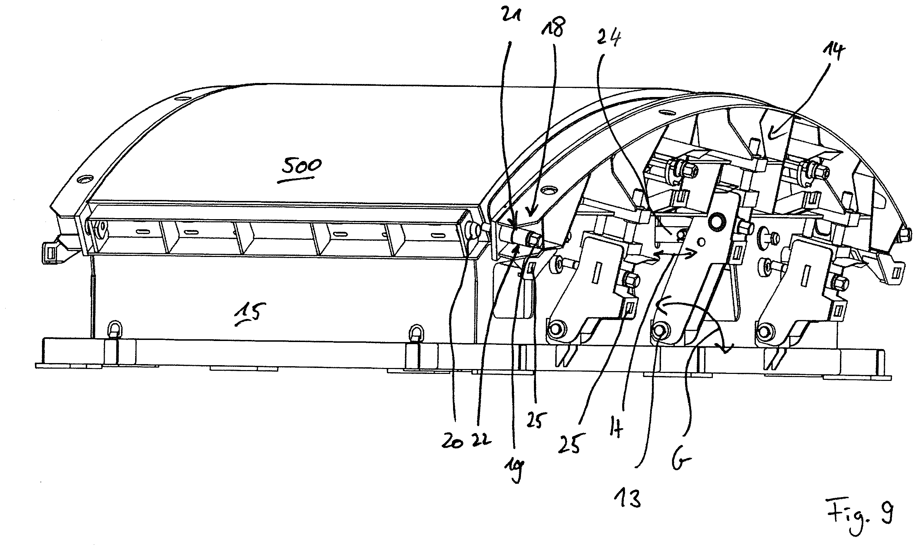

Eine erste Ausführungsform der Schalung 10 (siehe Fig. 5 bis 10) ist beispielsweise über einen Sockel 11 des Transportmittels 112 angeordnet. Die Schalung selbst weist eine Basis 12 auf, mit der sie auf dem Sockel 11 anordbar ist. Über der Basis ist ein Innenraum 17 als eine Betonwanne vorgesehen, der aus einem Boden 16 und Innenwänden der Stirnwände 15 und Seitenwände 14 gebildet ist. In diese Betonwanne bzw. in diesen Innenraum 17 werden die Einbauteile und der Beton eingebracht.

Über Schwenkverbindungen 13 ist die Basis 12 in dieser Ausführungsform nicht beschränkend mit zwei Seitenwänden 14 der Schalung 10 verschwenkbar verbunden. Weiterhin weist die Schalung 10 zwei Stirnwände 15 auf. In den in den Figuren 5 bis 10 gezeigten Schalungen 10 sind die Stirnwände 15 fest mit der Basis 12 verbunden. Es ist hier genauso möglich, dass auch die Stirnwände 15 über Gelenksverbindungen mit der Basis 12 fest schwenkbar verbunden sind.

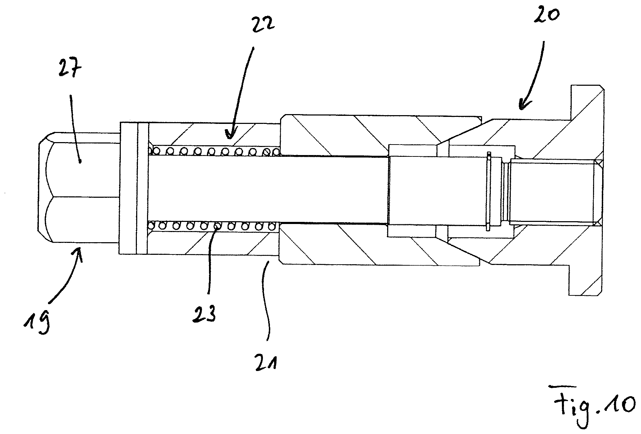

In der in den Figuren 5 bis 10 gezeigten Ausführungsform werden die Seitenwände 14 über Schraubverbindungen mit der Basis 12 und den Stirnwänden 15 haltend verbunden. Eine solche Schraubverbindung ist geschnitten in Figur 10 dargestellt. Sie weist eine Schraube 19 auf, die in ein Gewindeelement 20, die an der Basis 12 oder beispielsweise an der Stirnwand 15 angeordnet ist, eingeschraubt wird. Die Schraube 19 ist eingesteckt in eine beispielsweise an der Seitenwand 14 über einer durchgängigen Öffnung (nicht dargestellt) angebrachten Hülse 21. Die Hülse 21 weist dabei einen Federabschnitt 22 auf, in dem eine Feder 23 vorgesehen ist.

Sind das Gewindeelement 20 und die Hülse 21 fluchtend übereinander angeordnet, wenn beispielsweise die Seitenwand 14 gegen die Stirnwand 15 und die Basis 12 angeordnet ist, kann die Schraube 19 in das Gewindeelement 20 eingeschraubt werden und damit die Seitenwand 14 gegen die Basis 12 und /oder die Stirnwand 15 arretieren.

Dafür ist ein Antriebssystem vorgesehen, dass das Bewegen der Seitenwände 14 gegen die Basis 12 und/oder die Stirnwände 15 alternativ auch den Boden 16 ermöglicht. Beispielsweise kann es sich hierbei um ein Spindelsystem als mechanischen Antrieb handeln, dass, wenn es angetrieben wird, die Seitenwände 14 um die Schwenkverbindung 13 in Doppelpfeilrichtung G entweder von der Basis 12 und den Stirnwänden 15 und dem Boden 16 weg oder zu diesen hinbewegt werden. Alternativ können hierfür auch andere Antriebssysteme wie beispielsweise Hydraulikzylinder eingesetzt werden. Ein weiteres Ausführungsbeispiel mit einem hydraulischen Antriebssystem wird in einem zweiten erfindungsgemäßen Ausführungsbeispiel erläutert, lässt sich aber auch beim ersten Ausführungsbeispiels alternativ einsetzen.

Wird ein mechanisches Antriebssystem verwendet, so kann es so ausgelegt werden, dass es selbsthemmend ist, so dass keine Schraubverbindungen notwendig sind, um die Seitenwände 14 gegen den Boden 16 und die Seitenwände 15 zu halten. Alternativ oder zusätzlich kann auch ein Sperrelement (nicht dargestellt) verwendet werden, um ein Halten zu gewährleisten, indem eine Rückbewegung des Spindelantriebs verhindert wird.

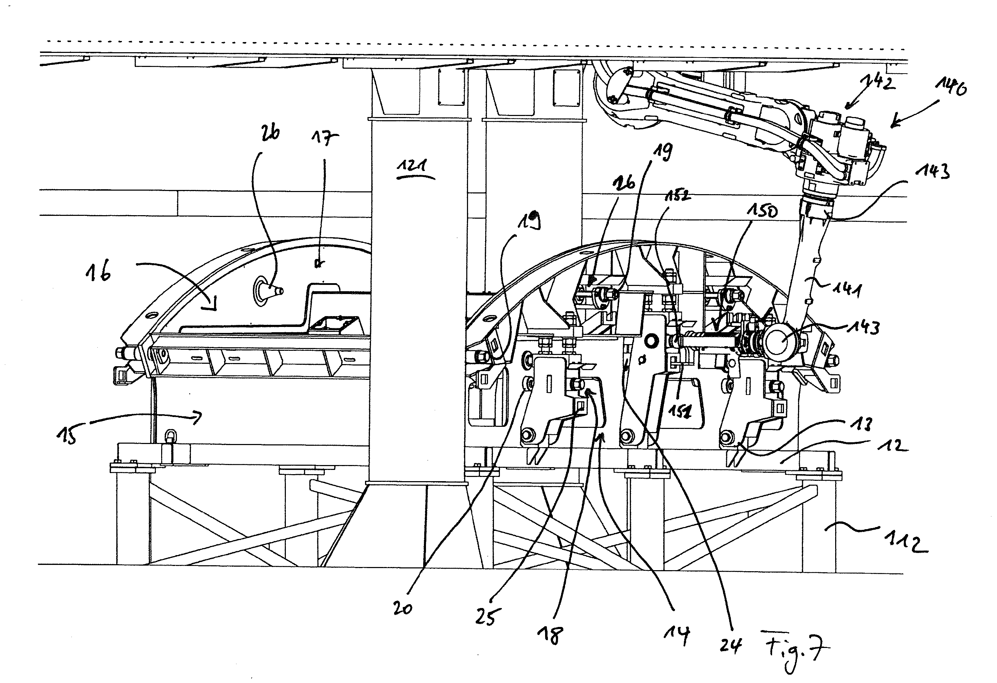

In einer bevorzugten Ausführungsform lässt sich die Zentralspindel auch mit einem geeigneten Werkzeug, vorzugsweise dem gleichen Werkzeug, mit dem die Schrauben 19 gelöst und festgezogen werden, antreiben. In den Figuren 7, 8 und 9 ist ein Stabelement 24 gezeigt, dass von der Zentralspindel in Doppelpfeilrichtung H bewegbar ist.

Das Einschrauben der Schraube 19 in das Gewindeelement 20 erfolgt gegen das Federelement 23, bzw. beim Ausschrauben drückt das Federelement 23 die Schraube 19 nach außen, sodass sich diese leichter beim Ausschrauben aus dem Gewindeelement 20 heraus bewegt.

Hierdurch ist es auf einfache Weise möglich, dass beim Einsatz eines Drehmomentschraubers als Werkzeug 150 am Roboter 140 dieser die Schraube 19 aus dem Gewindeelement 20 herausschrauben kann, sodass sich diese sicher löst, ohne dass der Drehmomentschrauber eine Zugkraft auf die Schraube 19 ausüben muss.

Weiterhin weist die Schalung 10 im Bereich der Schrauben 19 Eingriffsöffnungen 25 auf, in die ein Drehmomentabtragelement 151 eingreift, um das Werkzeug 150 entsteht bzw. den Roboter 140 zu entlasten, die sonst das Drehmoment entsprechend abtragen müssten.

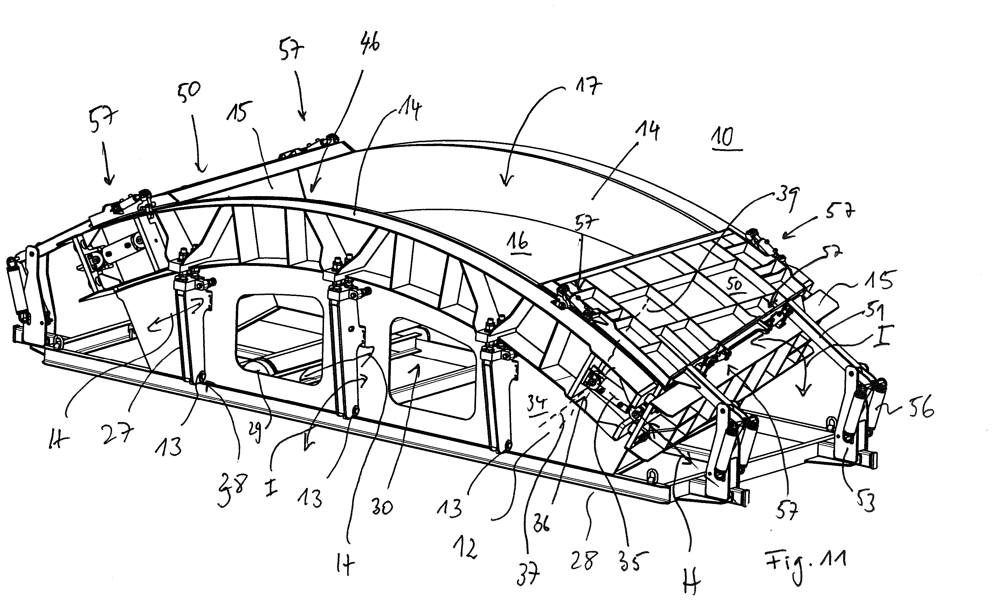

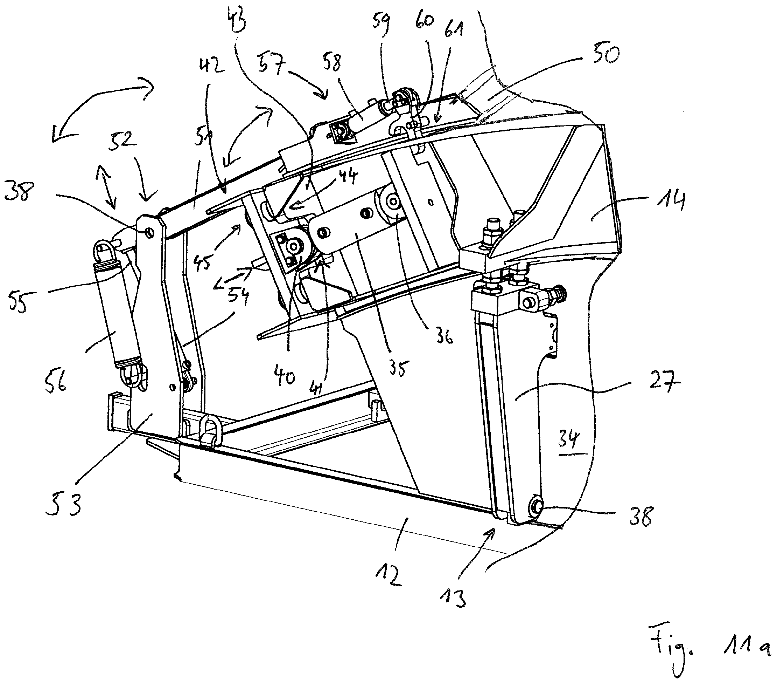

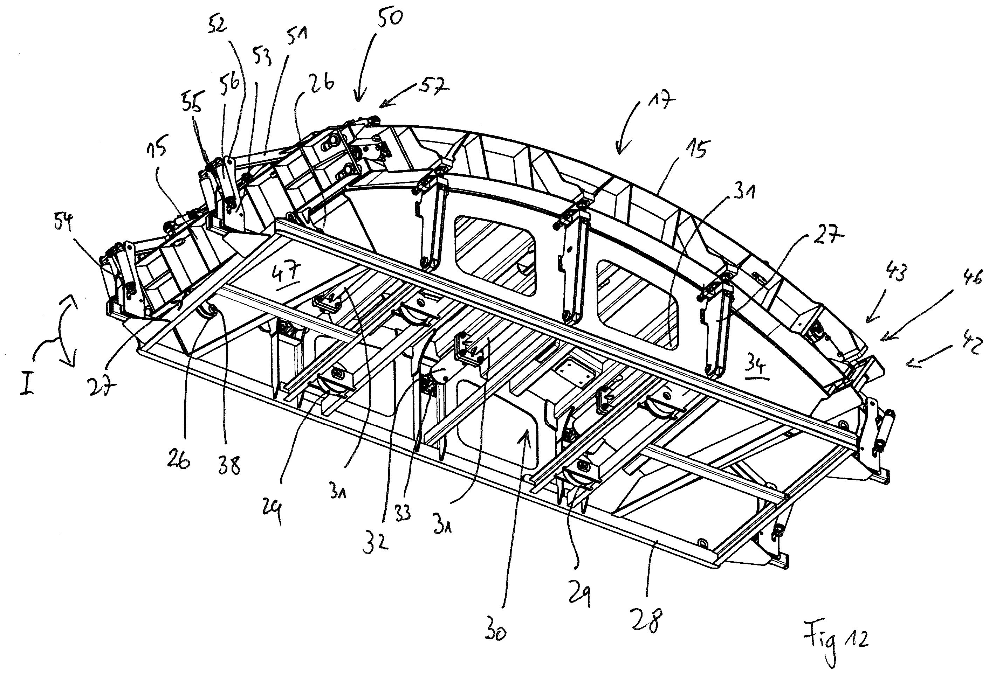

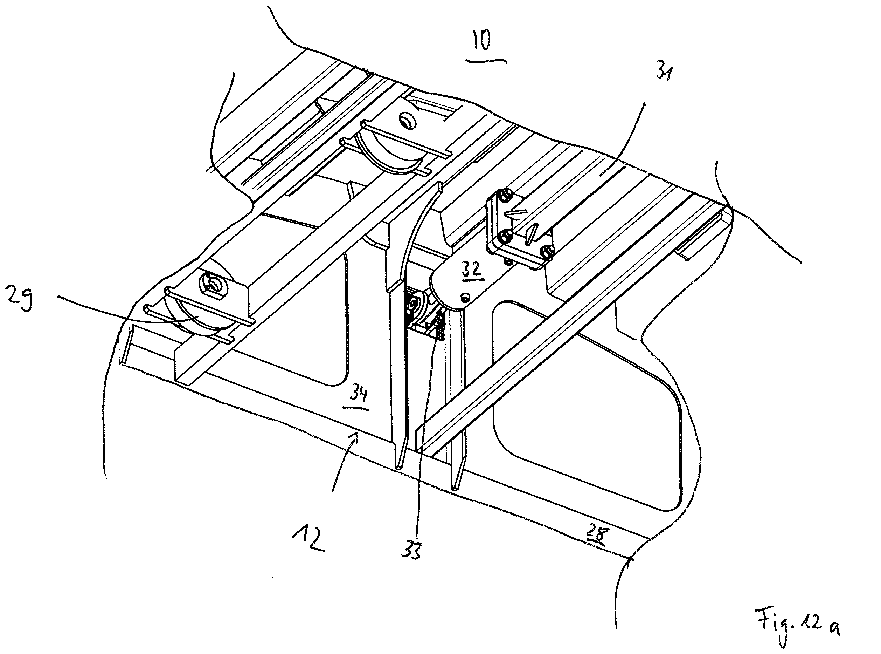

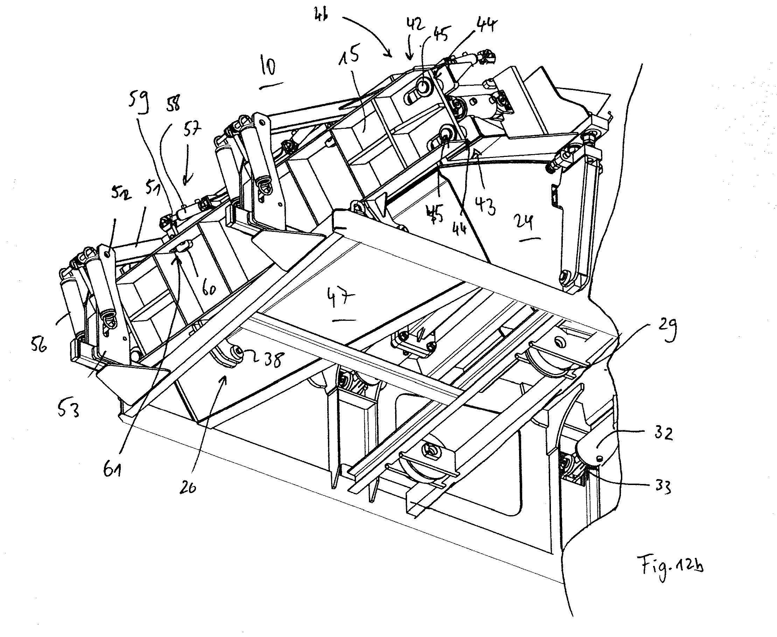

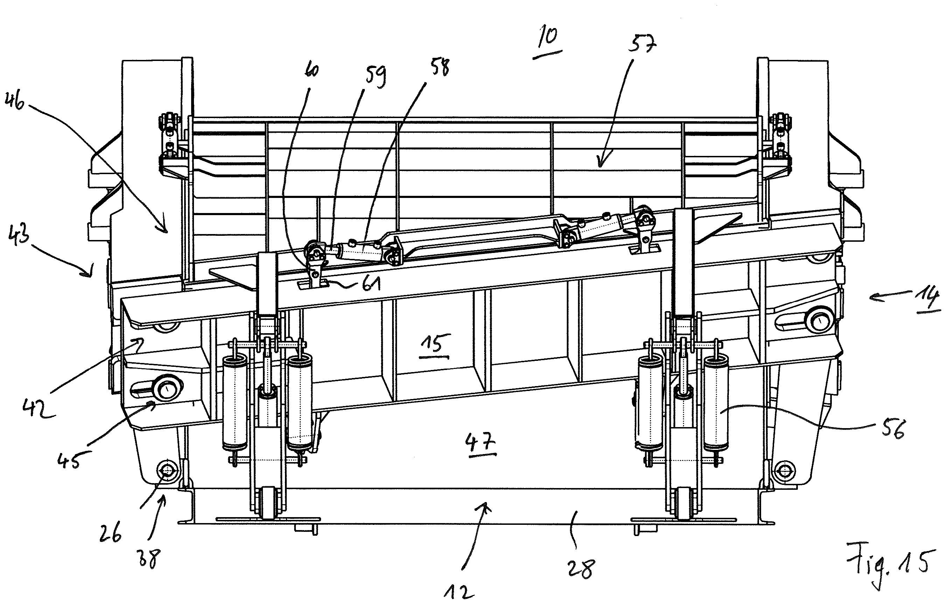

Eine zweite erfindungsgemäße Ausführungsform der Schalung 10 ist in den Fig. 11 bis 15 dargestellt.

Die Schalung 10 weist einen Innenraum 17 zur Aufnahme von Bewehrung, Einbauteilen und Beton zur Herstellung des Betontübbings 500 auf. Dieser wird gebildet durch einen Boden 16 sowie die Innenseiten der Seitenwände 14 und der Stirnwände 15. Der Boden 16 ist dabei auf einer Basis 12 angeordnet.

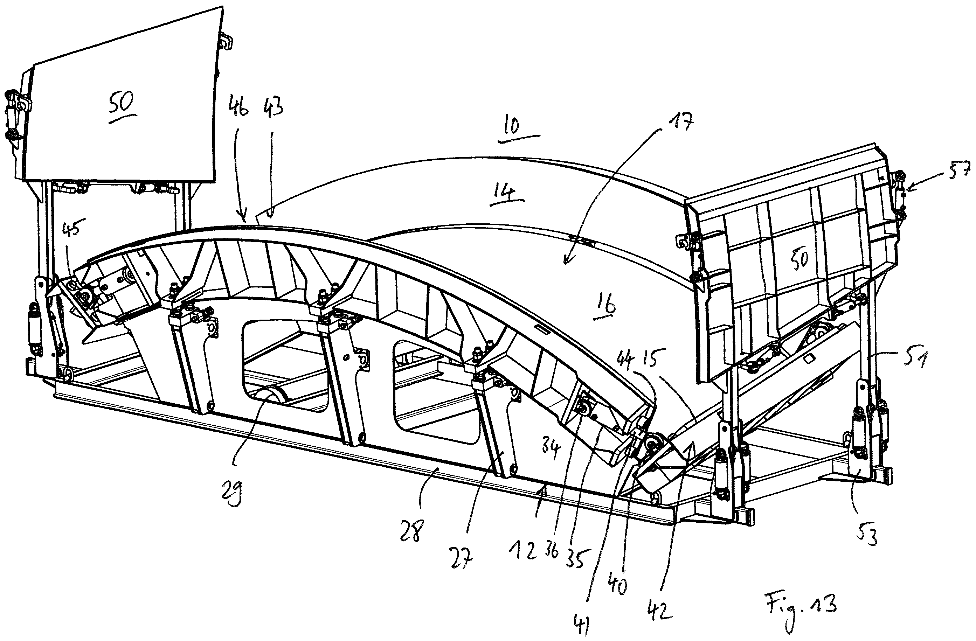

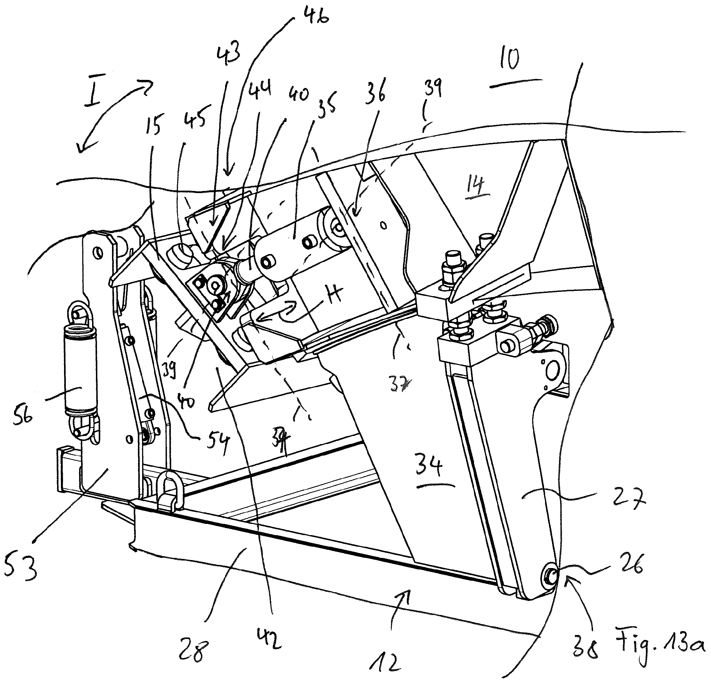

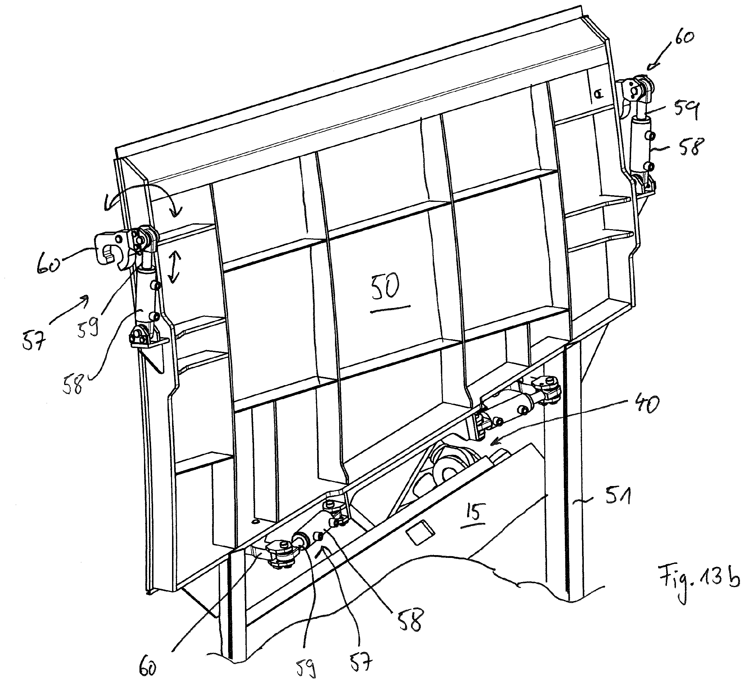

Die Seitenwände 14 und die Stirnwände 15 sind fest an der Basis über eine Schwenkverbindung 13, 26 schwenkbar angeordnet. Die Schwenkverbindung 13, 26 ist jeweils über ein Verbindungselement 27 mit der Seitenwand 14 bzw. mit der Stirnwand 15 verbunden. Über die Verbindungselemente 27 werden die Seitenwände 14, Stirnwände 15 um einen Drehpunkt 28 verschwenkt, sodass sich die Seitenwände 14, Stirnwände 15 vom Boden 16 lösen und nach außen verschwenkt werden, wie dieses in Figur 13 gezeigt ist. Das Verschwenken erfolgt in Doppelpfeilrichtung I.

Die Basis 12 weist einen unteren Rahmen 28 auf, an dem unter anderem beispielsweise ein Fahrwerk angeordnet ist, das hier beispielhaft Räder 29 aufweist. Alternativ kann der Rahmen 28 auch auf einem Transportelement 112 angeordnet sein, um entlang einer Produktionslinie verfahren zu werden, oder der Fahrweg der Produktionslinie selber weist Rollen auf, auf denen die Schalungen 10 verfahrbar sind.

In einem Innenraum 30 der Basis 12 sind Basiselemente 31 und Aktuatoren 32, hier bevorzugt in Form von Hydraulikzylindern, vorgesehen, die mit dem Basiselement 31 fest verbunden sind. Ein Bewegungselement 33 des Aktuators 32, hier beispielsweise eine Kolbenstange, ist mit dem Verbindungselement 27 verbunden. Durch lineares Bewegen des Bewegungselementes 33 des Aktuators 32 wird das Verbindungselement 27 von einer Seitenwand 34 der Basis 12 in Doppelpfeilrichtung H bewegt. Gleichzeitig wird es um den Drehpunkt 38 gedreht, sodass die Seitenwand 14 vom Innenraum 17 bzw. Boden 16 wegbewegt wird, sodass die Schalung 10 in Bezug auf die Seitenwände 14 geöffnet wird.

Zum Öffnen der Stirnwände 15, die ebenfalls über ein Verbindungselement 27 mit einer Schwenkverbindung 26, die einen Drehpunkt 38 aufweist, mit der Basis 12 verbunden ist, ist wenigstens ein Aktuator 35, hier beispielsweise ein Hydraulikzylinder, vorgesehen. Dieser kann ähnlich zu dem zuvor beschriebenen Aktuator 32 in Verbindung mit dem Basiselement 31 im Innenraum 30 angeordnet sein. Alternativ ist der Aktuator 35 über eine Verbindung 36 an der Seitenwand 14 angeordnet. In der Verbindung 36 ist der Aktuator 35 um eine erste Achse 37 drehbar und gleichzeitig um eine zweite Achse 39 drehbar angeordnet, sodass der Aktuator 35, wenn die Stirnwand 15 geöffnet ist, zusammen mit der Seitenwand 14 beim Öffnen derselben verschwenkt werden kann.

Gleiches gilt auch für die Verbindung 40, mit der der Aktuator 35 mit der Stirnwand 15 verbunden ist. Der Aktuator 35 weist ein Bewegungselement 41 auf, hier beispielsweise eine Kolbenstange, die aus dem Aktuator 35 in Doppelpfeilrichtung H heraus bewegt werden kann, um die Stirnwand 15 um den Drehpunkt 38 in der Schwenkverbindung 26 in Doppelpfeilrichtung I zu verschwenken. Eine Ecke 46 des Innenraums 17 wird durch das Berühren einer Außenseite 42 einer Stirnwand 15 mit einer Außenseite 43 einer Seitenwand 14 gebildet. Zusätzlich sind an der Außenseite 42 der Stirnwand 15 und dazu entsprechend passend an der Außenseite 43 der Seitenwand 14 ein männliches und ein weibliches Eingriffelement 44, 45 vorgesehen, die im geschlossenen Zustand der Schalung ineinandergreifen. Hier ist bevorzugt das männliche Eingriffelement 45 an der Stirnwand 15 und das weibliche Eingriffelement 44 an der Seitenwand 14 angeordnet, sodass das männliche Eingriffelement 45 ein Bewegen der Seitenwand 14 im geschlossenen Zustand der Stirnwand 15 verhindert. Durch Anziehen und Halten des Bewegungselements 41 des Aktivators 35 wird die Stirnwand 15 an ihrem äußeren Ende 42 auf die Seitenwand 14 an ihrem äußeren Ende 43 angepresst. Gleichzeitig greift das männliche Eingriffelement 45 in das weibliche Eingriffelement 44 und sperrt dadurch zusätzlich zum Anziehen und Halten des Bewegungselements 33 des Aktuators 32, sodass die Seitenwand 14 nicht vom Boden 16 gelöst werden kann, solange die Stirnwand 15 am Boden 16 anliegt. Durch das Anziehen und Halten des Bewegungselements 41 des Aktivators 35 am äußeren Ende 42 wird gleichzeitig bevorzugt in Verbindung mit den Eingriffelementen 44, 45, ein Öffnen der Ecken 46, gebildet zwischen den Seitenwänden 14 und den Stirnwänden 15, effektiv und einfach vermieden.

Ein Ablösen der Seitenwände 14 und der Stirnwände 15 vom Boden 16 beispielsweise durch Lastverformung durch den eingebrachten Beton wird durch das Verteilen der Schwenkverbindungen 13, 26 entlang der Seitenwände 34, 47 der Basis 12 verhindert.

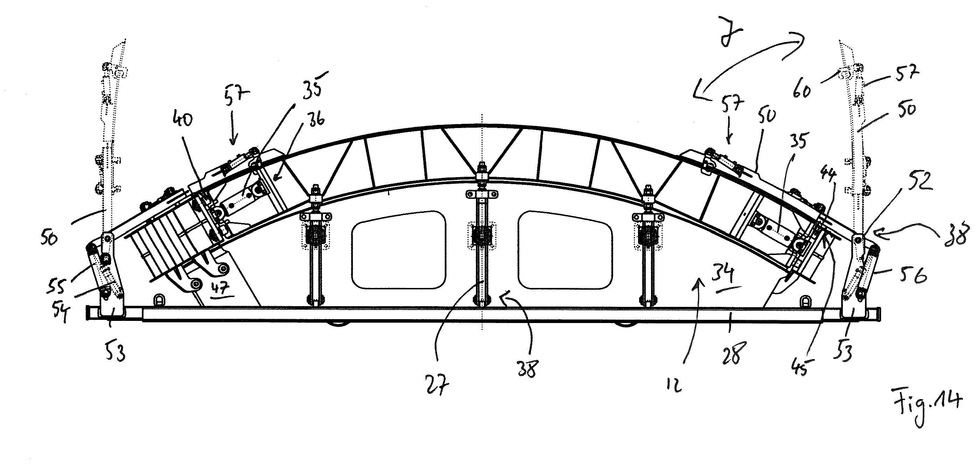

Weiterhin weist die Schalung 10 zwei Deckel 50 auf, die an der Basis 12 angebracht sind und während des Herstellungsprozesses des Betontübbings 500 entweder geschlossen, wie in Figur 11 dargestellt, oder geöffnet, wie in Figur 13 und 14 dargestellt, sind.

Die Deckel 50 können in Doppelpfeilrichtung J zwischen der geschlossenen Position auf dem Innenraum 17 und der geöffneten Position verschwenkt werden. Sie dienen dazu, die Schalung 10 bzw. deren Innenraum 17 nach oben zu schließen, wenn der Beton in den Innenraum 17 eingefüllt wird. Bei der Tübbingherstellung sind Schalungen 10 bekannt mit Teildeckeln, wie die Deckel 50 in der zweiten Ausführungsform der erfindungsgemäßen Schalung 10 hier gezeigt sind, oder auch ohne Deckel 50, wie dieses in der ersten erfindungsgemäßen Ausführungsform beispielhaft der Fall ist. Die nicht überdeckten Bereiche werden vor dem Befüllen der Schalung 10 mit Beton mit einem Deckel geschlossen, wobei noch offene Bereiche vorhanden sind, durch die dann der Beton in den Innenraum 17 eingefüllt wird. Das Anbringen dieser zusätzlichen Deckel erfolgt vor oder in der Betonierarbeitsstation.

Sind wie hier im zweiten Ausführungsbeispiel Deckel 50 an der Schalung 10 vorgesehen, die zwischen einer geöffneten und einer geschlossenen Position bewegt werden können, so werden diese in oder vor der Betonierarbeitsstation geschlossen. Nach dem Betonieren werden die Deckel entweder entfernt oder wieder geöffnet, um die Oberfläche 520 des rohen Betontübbings in einer entsprechenden weitern Arbeitsstation/in einem weiteren Arbeitsschritt zu bearbeiten. Nach Abschluss dieses Arbeitsschritts werden die Deckel 50 wieder geschlossen. Anschließend werden die Schalungen 10 mit geschlossenen Deckeln 50 der Härtestation zugeführt. Innerhalb der Härtestation bleiben die Deckel 50 dann entsprechend geschlossen. Nachdem die Härtung abgeschlossen ist, werden die Deckel 50 geöffnet. Anschließend werden auch die Seitenwände 14 und die Stirnwände 15 in notwendiger Reihenfolge geöffnet. Hiernach ist der vorgehärtete Betontübbing 500 entnehmbar.

Nach der Entnahme des Betontübbings 500 wird die Schalung 10 entsprechend gereinigt und für die Herstellung eines neuen Betontübbings 500 vorbereitet, wie zuvor beschrieben. Je nach Möglichkeiten des Transports werden die Seitenwände 14, Stirnwände 15 und Deckel 50 entweder geschlossen oder bleiben im geöffneten Zustand. In der Reinigungsstation müssen dann die Deckel 50, Stirnwände 15 und Seitenwände 14 ggf. wieder geöffnet werden, damit eine vollständige Reinigung vollzogen werden kann. Im Anschluss an die Reinigung werden dann die Seitenwände 14 und die Stirnwände 15 geschlossen. Der Innenraum 17 wird dann mit entsprechender Bewehrung und Einbauteilen bestückt. Ist dieses abgeschlossen, wird anschließend wie zuvor beschrieben die Schalung 10 auf das Betonieren vorbereitet.

Die Deckel 50 sind mit Verbindungselementen 51 versehen, die über eine Schwenkverbindung 52 mit der Basis 12 verbunden sind. Die Schwenkverbindung 52 ist dabei an einem Vorsprungelement 53 drehbar angeordnet. Vorgesehen ist ein Aktuator 54, der parallel zum Vorsprungelement 53 mit der Basis 12 verbunden ist. Das Verbindungselement 51 erstreckt sich über die Schwenkverbindung 52 hinaus. An diesem Teil des Verbindungselement 51 greift dann das Bewegungselement 55 des Aktuators 54 an. Durch Ein- und Ausfahrt des Bewegungselements 55 wird der Deckel 50 in Doppelpfeilrichtung J um den in der Schwenkverbindung 52 befindlichen Drehpunkt 38 verschwenkt. Um ein besseres Öffnen und Schließen bzw. Durchführen der Schwenkbewegung in Pfeilrichtung J zu gewährleisten, sind Federelemente 56 zur Unterstützung vorgesehen.

Bei dem Aktuator 54 handelt es sich hier bevorzugt um einen Hydraulikzylinder. Das Bewegungselement 55 stellt dabei die Kolbenstange des Hydraulikzylinders dar. Der Aktuator 54 bewirkt neben dem Öffnen und Schließen auch das Halten des Deckels 50 in der jeweiligen Position.

Zusätzlich sind zur Sicherung am Deckel 50 Sicherungselemente 57 vorgesehen, die mit einem Aktuator 58 versehen sind, der ein Bewegungselement 59 aufweist. Das Bewegungselement 59 ist verbunden mit einem Sperrelement 60, dass über das Ein- und Ausfahren des Bewegungselements 59 zwischen einer Verriegelungspositionen einer freien Position bewegbar ist, hier bevorzugt verschwenkbar. An den Seitenwänden 14 bzw. Stirnwänden 15 sind zum Verriegeln Eingrifföffnungen 61 vorgesehen, in die das Sperrelement 60 zum Verriegeln eingreift. Das Verriegeln erfolgt beispielsweise während des Härtens.

Zur Steuerung der Aktuatoren der Schalung 10, wenn diese als Hydraulikzylinder ausgeführt sind, sind diese Teil eines Hydraulikkreislaufes. Die Aktoren werden nachfolgend als Hydraulikzylinder bezeichnet. Hierbei sind die Hydraulikzylinder 32 zum Öffnen und Schließen der Seitenwände und die Hydraulikzylinder 35 zum Öffnen und Schließen der Stirnwände so vorgesehen, dass die Wände schließen, wenn der Hydraulikzylinder einfährt. Die Hydraulikzylinder 54 des Deckels 50 und die Hydraulikzylinder 58 zum Betätigen der Sperrelemente 60 sind dabei so angeordnet, dass der Deckel 50 und das Sperrelement 60 schließen, wenn der Hydraulikzylinder einfährt.

An den jeweiligen Arbeitsstationen, an denen die Hydraulikzylinder betätigt werden müssen, wird über einen Anschluss der Hydraulikkreislauf an ein nicht dargestelltes Hydraulikaggregat angeschlossen. Das Aufbringen der haltenden Kraft der Hydraulikzylinder nach dem Verschließen der Seitenwände 14 und Stirnwände 15 sowie nach dem Verschließen der Deckel 50 und der Sperrelemente 60 muss nach Abkoppeln des Hydraulikkreislauf der Schalung 10 vom Antriebsaggregat bestehen bleiben.

Das Halten der notwendigen Verschlusskräfte erfolgt durch in den Hydraulikkreislauf eingebrachte Lasthalteventile (nicht dargestellt). Die Lasthalteventile bewirken, dass die in den Hydraulikzylinder eingebrachte Hydraulikflüssigkeit nicht aus diesem wieder zurückfließen kann, nachdem das Hydraulikaggregat den Hydraulikkreislauf nicht mehr mit Hydraulikflüssigkeit beaufschlagt, wodurch der Druck auf die Kolbenfläche des Hydraulikzylinders konstant bleibt.

Um Druckschwankungen/Volumenänderungen im Hydraulikkreislauf beispielsweise aufgrund von Temperaturänderungen in der Härteanlage entgegenzuwirken, sind an entsprechenden Stellen im Hydraulikkreislauf Ausgleichelemente vorgesehen. Hierbei kann es sich beispielsweise um Membranspeicher oder Blindzylinder handeln.

Welche Zylinder zuerst mit Hydraulikflüssigkeit beaufschlagt werden, ergibt dabei die notwendige Steuerungsreihenfolge. Zwischen den einzelnen Zylindern können zur Abfolge der Steuerung der einzelnen Bewegungen schaltbare Sperrelemente vorgesehen sein. Bevorzugt handelt es sich hierbei um Druckfolgeventile.

## Patentansprüche

1. Schalung (10) zur Herstellung eines Betontübbings (500) eines Tunnelausbausystems, mit einer Betonwanne zur Aufnahme einer zur Herstellung des Tübbings notwendigen Betonmenge und falls erforderlich zur Aufnahme der vorgesehenen Bewehrung des Betontübbings (500), wobei die Betonwanne wenigstens einen Boden (16) und an dem Boden (16) der Form nach angepassten Wände (14, 15) aufweist, wobei wenigstens ein Wand (14, 15) von dem Boden (16) lösbar und gegenüber dem Boden (16) zwischen einer geschlossenen Position und einer geöffneten Position verschwenkbar angeordnet ist, **dadurch gekennzeichnet, dass** die Schalung (10) wenigstens ein Antriebssystem zum Verschwenken der wenigstens einen Wand (14, 15) zwischen der offenen und der geschlossenen Position und zum Halten in der jeweiligen Position aufweist, und dass das Antriebssystem wenigstens einen Aktuator (32, 35) für das Verschwenken der wenigstens einen Wand (14, 15) zwischen der offenen und der geschlossenen Position aufweist, dass es sich bei dem Antriebssystem um ein Hydrauliksystem mit wenigstens einem Hydraulikkreislauf handelt, und dass das Antriebssystem wenigstens einen Hydraulikzylinder als den wenigstens einen Aktuator (32, 35) aufweist, der mit dem Hydraulikkreislauf verbunden ist.

2. Schalung nach Anspruch 1, **dadurch gekennzeichnet, dass** sich wenigstens zwei Wände (14, 15) an einem ihrer beiden äußeren Endbereiche mit ihren kurzen Seiten in geschlossener Position berühren und dabei eine Ecke (46) der Betonwanne ausformen.

3. Schalung nach Anspruch 2, **dadurch gekennzeichnet, dass** an einer der zwei Wände im äußeren Endbereich ein männliches Eingriffelement und an der anderen Wand im äußeren Endbereich ein weibliches Eingriffelement vorgesehen ist, die in geschlossener Position der zwei Wände ineinandergreifen.

4. Schalung nach Anspruch 2, **dadurch gekennzeichnet, dass** die zwei Wände in ihren äußeren Endbereichen miteinander mittels wenigstens einer Schraubverbindung (18) oder einer Klemmverbindung miteinander verbunden werden, wobei die Schraubverbindung oder Klemmverbindung bevorzugt zur Positionssicherung dient, und/oder wobei die Schraubverbindung (18) eine Schraube (19) mit einem entlang wenigstens eines Teils der Schraube (19) angeordneten Federelement (23) aufweist

5. Schalung nach einem der Ansprüche 1 bis 4, **dadurch gekennzeichnet, dass** die wenigstens eine Wand zum Bewegen zwischen der offenen und der geschlossenen Position mit wenigstens zwei Hydraulikzylindern (32, 35) des Antriebssystems verbunden ist.

6. Schalung nach einem der Ansprüche 1 bis 5, **dadurch gekennzeichnet, dass** das wenigstens eine Wandelement zwei äußere Endbereiche aufweist und dass pro Endbereich zum Bewegen und Halten des Wandelements wenigstens ein Hydraulikzylinder (32, 35) vorgesehen ist

7. Schalung nach Anspruch 1, **dadurch gekennzeichnet, dass** der Hydraulikkreislauf ein Sperrelement zum Halten des Drucks im Hydraulikkreislauf aufweist, wobei es sich bevorzugt um ein Lastaufnahmeventil handelt.

8. Schalung nach Anspruch 1 oder 7, **dadurch gekennzeichnet, dass** der Hydraulikkreislauf ein Element zum Ausgleich einer Druckänderung und/oder einer Volumenänderung im Hydraulikkreislauf aufweist, wobei es sich bevorzugt um einen Blindzylinder oder um einen Membranspeicher handelt.

9. Schalung nach einem der Ansprüche 1, 7 oder 8, **dadurch gekennzeichnet, dass** der Hydraulikkreislauf wenigstens ein Anschlusselement zum lösbaren Anschließen des Hydraulikkreislaufs an ein Hydraulikaggregat als externen Antrieb des Antriebssystems an einer Arbeitsstation aufweist.

10. Schalung nach einem der Ansprüche 1 bis 9, **dadurch gekennzeichnet, dass** an der Schalung schwenkbar wenigstens ein Deckelelement vorgesehen ist, der auf der Oberseite der Betonwanne anordbar ist und auf dieser die Oberseite wenigstens teilweise überdeckt, und dass bevorzugt das Deckelelement zwischen einer offenen und einer geschlossenen Position mit wenigstens einem Aktuator verschwenkbar ist, der das Deckelement besonders bevorzugt in der jeweiligen Position hält.

11. Schalung nach Anspruch 10, **dadurch gekennzeichnet, dass** das Deckelelement ein Arretierungselement aufweist, das das Deckelelement in geschlossener Position gegenüber der Schalung arretiert, und dass bevorzugt das Arretierungselement zwischen einer offenen und einer geschlossenen Position mit wenigstens einem Aktuator verschwenkbar ist.

12. Schalung nach Anspruch 4, **dadurch gekennzeichnet, dass** die Klemmverbindung ein Arretierungselement aufweist, das an einem der Wandelemente angeordnet ist und verschwenkbar zwischen einer offenen und einer geschlossenen Position mit wenigstens einem Aktuator bewegbar ist.

13. Schalung nach einem der Ansprüche 2 bis 12, **dadurch gekennzeichnet, dass** die Schalung (10) zwei Seitenwände (14) und zwei Stirnwände (15) als wenigstens eine Wand (14, 15) aufweist, die die vier Ecken der Betonwanne bilden, und dass jeweils ein Hydraulikzylinder (35) über eine erste Verbindung (36) an der Seitenwand (14) und über eine zweite Verbindung (40) mit der Stirnwand (15) angeordnet ist, und dass der Hydraulikzylinder (35) um eine erste Achse (37) in der ersten Verbindung (36) um eine zweite Achse (39) in der zweiten Verbindung (40) drehbarangeordnet ist, sodass der Hydraulikzylinder (35), wenn die Stirnwand (15) geöffnet ist, zusammen mit der Seitenwand (14) beim Öffnen der Seitenwand (14) verschwenkbar ist.

14. Schalung nach einem der Ansprüche 1 bis 13, **dadurch gekennzeichnet, dass** die Betonwanne der Schalung (10) auf einer Basis (12) angeordnet ist, die einen Innenraum (30) aufweist, dass die Schalung (10) zwei bewegbare Seitenwände (14) aufweist, dass im Innenraum (30) pro bewegbarer Seitenwand (14) wenigstens zwei Hydraulikzylinder (32) zum Öffnen und Schließen der Seitenwände (14) vorgesehen sind, und dass jeweils zwei Hydraulikzylinder (32) gegenüberliegender Seitenwände (14) über ein Basiselement (31) miteinander verbunden sind.
